# EUROPEAN PATENT APPLICATION

(11) **EP 4 732 961 A1**
(43) Date of publication of application: **29.04.2026**
(21) Application number: 25210761.0
(22) Date of filing: 23.10.2025
(51) Int. Cl.: B05B 13/00, B05B 15/52, B41J 2/165, B41J 3/407, B05B 13/04

(54) **PAINTING SYSTEM**

(30) Priority: 24.10.2024 JP 2024187157
(71) Applicant: ABB SCHWEIZ AG, 5400 Baden (CH)
(72) Inventor: TAWATA, Takahiro, Tokyo 141-6022 (JP); YAMAZAKI, Takurou, Tokyo 141-6022 (JP); UMEZAWA, Norio, Tokyo 141-6022 (JP)
(74) Representative: Zimmermann & Partner Patentanwälte mbB

(57) **Abstract**

**[Problem]**To provide a painting robot capable of shortening the time required for wetting and wiping of a nozzle forming surface to improve painting productivity.

**[Solution]**A painting robot (10) comprises: a painting head unit (50) including a painting head (53) having a plurality of nozzles (54); a robot arm (R1) having the painting head unit (50) fitted on a distal end thereof, the robot arm moving the painting head unit (50) to a desired position; and a wiping mechanism (200) for wiping a nozzle-forming surface (52) while wetting the nozzle-forming surface, wherein the wiping mechanism (200) includes a wiping member that slides on the nozzle-forming surface (52) while contacting the nozzle-forming surface, a guide mechanism (220) that is attached to the robot arm (R1) or the painting head unit (50) and that guides sliding of the wiping member (210) on the nozzle-forming surface (52), and a wiping actuator (230) that imparts a driving force for causing the wiping member (210) to slide on the nozzle-forming surface (52).

## Description

### [Technical Field]

The present invention relates to a painting system comprising a painting robot.

### [Background Art]

In a painting line for vehicles such as automobiles, robot painting using robots has become mainstream. As an example of a configuration related to this robot painting, Patent Document 1 describes wiping a nozzle surface (12) with a wiper (14), for example. Patent Document 1 discloses a configuration for wiping the nozzle surface (12) by moving a head (10) to the wiper (14) fixed in the vicinity of a robot (20) in accordance with the degrees of freedom of an arm (21).

### [Related Art Documents]

### [Patent Documents]

**[Patent Document 1]** JP7408676B2

### [Summary of the Invention]

### [Problems to be Solved by the Invention]

If the wiping of the nozzle surface (12) is omitted, residual paint on the nozzle surface (12) adversely affects formation of the paint film, ultimately leading to a deterioration in painting quality. Therefore, wiping of the nozzle surface (12) is necessary; however, in the configuration disclosed in Patent Document 1, movement time for the head (10) to move to the wiping device such as the wiper (14) is required, and after wiping, it is again necessary to move the head (10) back to the position for painting.

Therefore, when wiping is performed, the movement of the head (10) takes time, and thus, if a wiping step is frequently incorporated during the painting work, painting productivity is reduced.

In painting, when a discharge interval from the paint nozzle becomes long, there is a risk that paint inside the nozzle may dry and the discharge performance of the paint may deteriorate.

The present invention has been made in view of the above circumstances, and an object of the present invention is to provide a painting robot capable of shortening the time required for wetting and wiping a nozzle forming surface to improve painting productivity.

### [Means for Solving the Problems]

In order to solve the abovementioned problems, a first aspect of the present invention provides a painting robot for performing painting on a painting site of a vehicle, the painting robot comprising: a painting head unit including a painting head having a plurality of nozzles that discharge droplets of paint; a robot arm having the painting head unit fitted on a distal end thereof, the robot arm moving the painting head unit to a desired position; and a wiping mechanism for wiping a nozzle forming surface where the nozzles open, while wetting the nozzle forming surface, wherein the wiping mechanism includes a wiping member that slides on the nozzle forming surface while contacting the nozzle forming surface, a guide mechanism that is attached to the robot arm or the painting head unit, and that guides sliding of the wiping member on the nozzle forming surface, and a wiping actuator that imparts a driving force for causing the wiping member to slide on the nozzle forming surface.

### [Effects of the Invention]

According to the present invention, it is possible to provide a painting robot capable of shortening the time required for wetting and wiping of a nozzle forming surface to improve painting productivity.

### [Brief Description of the Drawings]

FIG. 1 is a schematic diagram showing the overall configuration of a painting robot according to an embodiment of the present invention.
FIG. 2 is a diagram showing the schematic configuration of a painting system comprising the painting robot shown in FIG. 1.
FIG. 3 is a diagram showing a front view state of a nozzle forming surface for discharging paint of a painting head unit provided to the painting robot shown in FIG. 1.
FIG. 4 is a plan view showing a configuration of a nozzle forming surface in another painting head unit different from the painting head unit shown in FIG. 3.
FIG. 5 is a diagram showing a schematic configuration of a wiping mechanism according to a first configuration example of the present invention.
FIG. 6 is a diagram showing an example of a configuration of a roller moving mechanism and a wiping actuator of the wiping mechanism shown in FIG. 5.
FIG. 7 is a diagram showing a schematic configuration of a wiping mechanism according to a second configuration example of the present invention.
FIG. 8 is a diagram showing a configuration in which, in the configuration shown in FIG. 7, a wetting member is disposed on the downstream side in a movement direction of a wiping wiper.
FIG. 9 is a diagram showing a schematic configuration of a wetting mechanism according to a third configuration example of the present invention.
FIG. 10 is a diagram showing a schematic configuration of a wetting mechanism according to a fourth configuration example of the present invention.
FIG. 11 is a diagram showing a painting robot equipped with a wiping mechanism according to a fifth configuration example of the present invention.
FIG. 12 is a diagram showing a painting robot equipped with a wiping mechanism according to a sixth configuration example of the present invention.
FIG. 13 is a diagram showing a painting robot equipped with a wiping mechanism according to a seventh configuration example of the present invention.
FIG. 14 is a diagram showing a painting system in which a nozzle forming surface is wiped using two painting robots according to an eighth configuration example of the present invention.
FIG. 15 is a diagram showing a painting system in which a nozzle forming surface is wiped using two painting robots according to a ninth configuration example of the present invention.

### [Embodiments for Carrying Out the Invention]

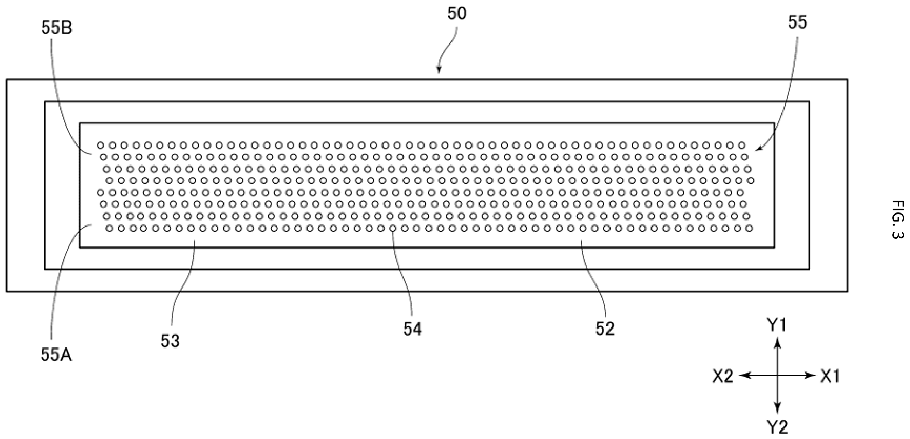

A painting system 1 and a painting robot 10 according to an embodiment of the invention will be described below with reference to the drawings. In the following description, as necessary, the X-direction is designated as the longitudinal direction of a nozzle forming surface 52 (painting head 53), with the X1 side being the right side in FIG. 3 and the X2 side being the left side in FIG. 3. The Y-direction is designated as the short-side direction (width direction) of the nozzle forming surface 52 (painting head 53), with the Y1 side being the upper side of the page in FIG. 3 and the Y2 side being the lower side of the page in FIG. 3.

### (1. Overview of the painting system 1 and the painting robot 10)

The painting system 1 and the painting robot 10 of the present embodiment perform "painting" on a painting target object such as a vehicle or a vehicle part (hereinafter, vehicle parts serving as parts of the vehicle are also described as the vehicle) positioned on a painting line in a factory for automobile manufacturing, with the aim of forming a paint film on the surface of the painting target object to provide surface protection and aesthetic appearance. Therefore, at prescribed time intervals, painting must be performed on vehicles moving along the painting line within a certain time and with the desired painting quality.

In the painting system 1 and the painting robot 10 of the present embodiment, it is possible not only to form the above paint film, but also to form various designs and images on painting target objects such as vehicles and vehicle parts. The painting target object is not limited to vehicles and vehicle parts, and may be any object requiring painting, such as various types of parts other than for automobiles (for example, exterior parts for airplanes or trains).

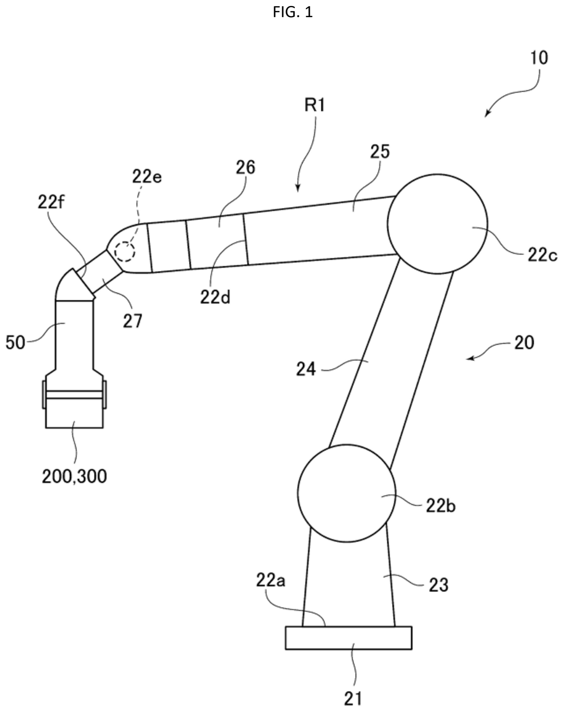

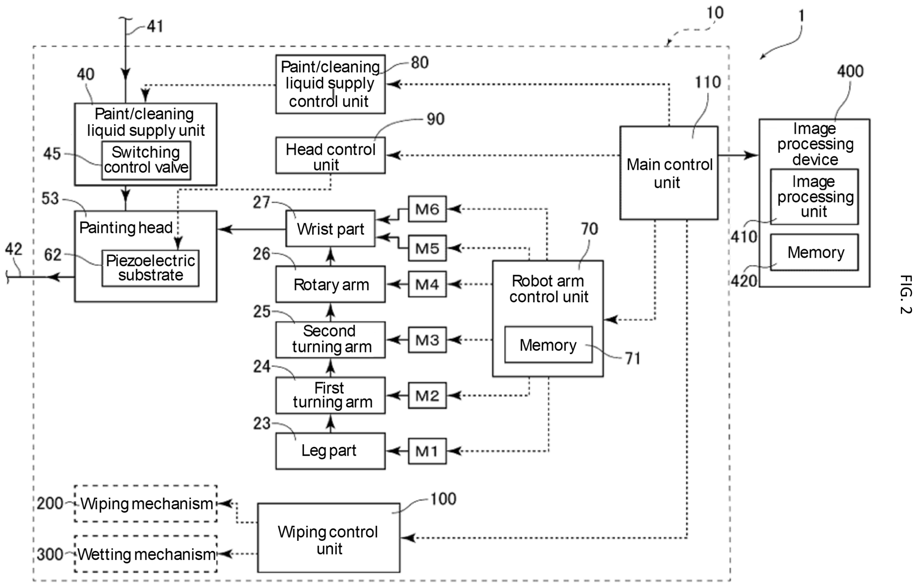

FIG. 1 is a schematic diagram showing the overall configuration of the painting robot 10 according to an embodiment of the present invention. FIG. 2 is a diagram showing the schematic configuration of the painting system 1 comprising the painting robot 10 shown in FIG. 1. As shown in FIG. 2, the painting system 1 comprises the painting robot 10 and an image processing device 400.

As shown in FIG. 1, the painting robot 10 includes a robot body 20 and a painting head unit 50 as main constituent components. The painting robot 10 shown in FIG. 1 illustrates, as one example, a six-axis vertically articulated robot, but the painting robot 10 may be any type of robot, such as a vertically articulated robot not having six axes, a horizontally articulated robot, a Cartesian robot, etc.

### (1-1. Robot Body 20)

As shown in FIG. 1, the robot body 20 includes, as main constituent components, a base 21, first to sixth rotary shafts 22a to 22f, a leg part 23, a first turning arm 24, a second turning arm 25, a rotary arm 26, a wrist part 27, and motors M1 to M6 (see FIG. 2) for driving these. The portion from the leg part 23 to the wrist part 27 corresponds to a robot arm R1, but portions other than this, such as the base 21, may also be regarded as corresponding to the robot arm R1.

Among these, the base 21 is a portion installed at an installation site such as a floor surface, and the base 21 may be able to travel relative to the installation site. The leg part 23 is a portion erected upward from the base 21 and is rotatably provided relative to the base 21 via the first rotary shaft 22a by the driving of the motor M1 (see FIG. 2). The leg part 23 may be configured not to rotate relative to the base 21.

The upper end of the leg part 23 is provided with the first turning arm 24 is provided so as to be turnable via the second rotary shaft 22b by the driving of the motor M2. Further, the distal end side of the first turning arm 24 is provided with the second turning arm 25 so as to be turnable via the third rotary shaft 22c by the driving of the motor M3.

On the distal end side of the second turning arm 25, the rotary arm 26 is provided so as to be rotatable about the central axis of the second turning arm 25. The rotary arm 26 is rotatable via the fourth rotary shaft 22d by the driving of the motor M4. The wrist part 27 is provided on the distal end side of the rotary arm 26. By the driving of the motor M5 and the motor M6, the wrist part 27 enables rotational motion about a plurality of axes having different orientations, such as two axes, for example. In FIG. 1, the rotary shafts about which rotational motion is possible are designated as the fifth rotary shaft 22e and the sixth rotary shaft 22f, respectively. Thus, the orientation of the painting head unit 50 can be controlled with high accuracy. The number of axes may be any number of two or more.

The painting head unit 50 is attached to the wrist part 27, but the painting head unit 50 may be detachably provided to the wrist part 27 instead.

### (1-2. Paint/Cleaning Liquid Supply Unit 40)

As shown in FIG. 2, the painting system 1 and the painting robot 10 are provided with a paint/cleaning liquid supply unit 40. The paint/cleaning liquid supply unit 40 supplies paint or cleaning liquid toward the painting head unit 50. Accordingly, the paint/cleaning liquid supply unit 40 comprises a supply path 41 for supplying paint from a paint reservoir (not shown) or for supplying cleaning liquid from a cleaning liquid reservoir (not shown), a pump (not shown), a valve or the like (not shown), and a return flow path 42 for collecting paint that was not discharged or cleaning liquid after cleaning.

The paint/cleaning liquid supply unit 40 is provided with a switching control valve 45. The switching control valve 45 is a control valve for switching between supplying paint from the paint reservoir (not shown) and supplying cleaning liquid from the cleaning liquid reservoir (not shown), and is operated under control of a paint/cleaning liquid supply control unit 80 described later. By providing such a switching control valve 45, the paint/cleaning liquid supply unit 40 can selectively supply either paint or cleaning liquid.

When a configuration is adopted in which paint is supplied from outside the painting robot 10, the painting robot 10 need not include a portion for storing paint, and the portion for storing paint may be provided outside the painting robot 10.

### (1-3. Painting Head Unit)

Next, the painting head unit 50 will be described. FIG. 3 is a diagram showing a front view state of a nozzle forming surface 52 for discharging paint of the painting head unit 50. As shown in FIG. 3, the painting head unit 50 includes a head cover (not shown), and various components including the painting head 53 are built into the head cover. The painting head 53 is provided with a large number of nozzles 54 for discharging paint.

As shown in FIG. 3, opening sections of the plurality of nozzles 54 are exposed on the surface (the nozzle forming surface 52) of the painting head 53 on the side where the paint is discharged. In the following description, the opening sections of the nozzles 54 are also referred to as the nozzles 54.

On the nozzle forming surface 52, a plurality of nozzle rows 55 are provided in which the nozzles 54 are continuous in a direction tilted with respect to the longitudinal direction of the painting head unit 50. In the present embodiment, the nozzle rows 55 are provided with a first nozzle row 55A located on one side (the Y2 side) in the main scanning direction (the Y-direction), and a second nozzle row 55B located on the other side (the Y1 side) in the main scanning direction.

When paint is discharged, the drive timing of each nozzle 54 is controlled such that droplets discharged from the nozzles 54 in the second nozzle row 55B land between droplets discharged from adjacent nozzles 54 in the first nozzle row 55A. As a result, the dot density during painting can be improved.

In the configuration shown in FIG. 3, the arrangement of the nozzles 54 in the first nozzle row 55A and the arrangement of the nozzles 54 in the second nozzle row 55B are tilted relative to the short-side direction (Y-direction; main scanning direction) of the painting head 53. However, such an arrangement of the nozzles 54 need not be adopted. For example, the nozzle rows 55 may be arranged along the short-side direction (Y-direction) of the painting head 53. The nozzle rows 55 may be a single nozzle row 55 without being divided into the first nozzle row 55A and the second nozzle row 55B in the short-side direction (Y-direction; main scanning direction) of the painting head 53, or may be divided into three or more nozzle rows.

Inside the painting head 53, a flow path (not shown) is provided for allowing paint to flow. Inside the painting head 53, a nozzle pressure chamber (not shown) is provided, and on one of the wall surfaces of the nozzle pressure chamber, a piezoelectric substrate 62 (see FIG. 2) is disposed for changing the volume of the nozzle pressure chamber to discharge paint from the nozzle 54. Therefore, by applying a voltage to the piezoelectric substrate 62 from outside, the piezoelectric substrate 62 expands and contracts to change the volume of the nozzle pressure chamber and enabling paint to be discharged from the nozzle 54.

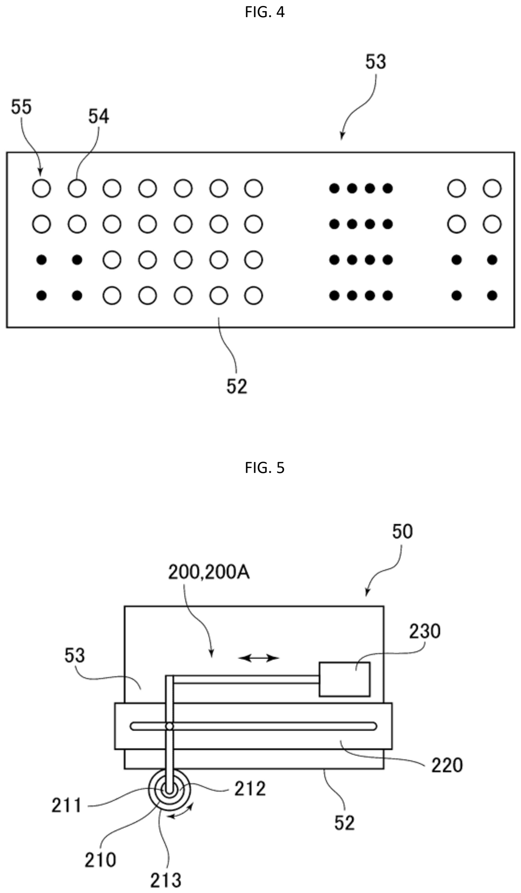

The painting head 53 is not limited to the configuration shown in FIG. 3. For example, as shown in FIG. 4, the nozzle rows 55 may be configured by arranging the plurality of nozzles 54 along the short-side direction (width direction; Y-direction) of the painting head 53. When painting a vehicle using the painting head 53 such as shown in FIG. 4, the painting may be executed with the longitudinal direction of the painting head 53 set to be slightly tilted with respect to the main scanning direction of the painting head 53.

For example, in the configuration of the painting head 53 shown in FIG. 3, if the nozzle rows 55 are tilted by an angle α with respect to the main scanning direction, it suffices to tilt the longitudinal direction of the painting head 53 by the angle α with respect to the main scanning direction of the painting head 53. When tilted in this manner, the same painting as that of the painting head 53 shown in FIG. 3 can be realized merely by adjusting the discharge timing of the paint from each nozzle 54.

### (1-4. Control Configuration of Painting System 1)

Next, a control configuration for controlling the operation of the painting system 1 will be described. The control configuration described below corresponds to a control unit. As shown in FIG. 2, the painting robot 10 includes a robot arm control unit 70, a paint/cleaning liquid supply control unit 80, a head control unit 90, a wiping control unit 100, a main control unit 110, and a wiping mechanism 200. The painting robot 10 is connected to the image processing device 400 to constitute the painting system 1.

The robot arm control unit 70, the paint/cleaning liquid supply control unit 80, the head control unit 90, the wiping control unit 100, the main control unit 110, and an image processing unit 410 described later are formed from a CPU (Central Processing Unit), memories such as ROM (Read Only Memory), RAM (Random Access Memory), and non-volatile memory, and other elements. The image processing unit 410 may use a GPU (Graphics Processing Unit) together with a CPU having excellent image processing performance, or in place of the CPU.

The painting robot 10 is also provided with various sensors (not shown), and outputs from the sensors are input to one of the robot arm control unit 70, the paint/cleaning liquid supply control unit 80, the head control unit 90, and the main control unit 110. Examples of the various sensors include, for example, an acceleration sensor, an angular velocity sensor, a position detection sensor that detects the position of each drive unit, and an image sensor, but sensors other than these may also be used.

Among these, the robot arm control unit 70 is a part that controls the driving of the above motors M1 to M6. The robot arm control unit 70 includes a memory 71, and the memory 71 stores programs and data created by robot teaching.

In the robot arm control unit 70, the driving of the motors M1 to M6 is controlled on the basis of programs and data stored in the memory 71 and image processing by the image processing unit 410 of the image processing device 400. By such control, the painting head unit 50 can pass through a desired position for performing painting at a desired speed or can be stopped at a prescribed position.

The memory 71 stores data (trajectory data) pertaining to the trajectory of the painting head 53 and posture data pertaining to the posture such as the tilt of the painting head 53, which are created by robot teaching in consideration of the paintable painting width of the painting head 53. The memory 71 may be provided in the painting robot 10, but the memory 71 may be present outside the painting robot 10, and information can be transmitted and received to and from the memory 71 via a wired or wireless communication means.

The paint/cleaning liquid supply control unit 80 is a part that controls the supply of paint or cleaning liquid to the painting head unit 50, and specifically, controls the operation of the pump, valves, and the like included in the paint/cleaning liquid supply unit 40. The paint/cleaning liquid supply control unit 80 also controls operation of the switching control valve 45 such that either paint or cleaning liquid is selectively supplied from the paint reservoir (not shown) and the cleaning liquid reservoir (not shown).

Preferably, the paint/cleaning liquid supply control unit 80 controls the operation of the pump and valves such that the paint or cleaning liquid is supplied at a constant pressure to the painting head unit 50 to be supplied with the paint or cleaning liquid.

The head control unit 90 a part that controls the operation of the piezoelectric substrate 62 within the painting head unit 50 on the basis of the image processing by the image processing unit 410.

The wiping control unit 100 controls the operation of the wiping mechanism 200 (wiping actuator 230) or a wetting mechanism 300 described later. The operation of the wiping mechanism 200 or the wetting mechanism 300 by the wiping control unit 100 will be described later.

The main control unit 110 is a part that transmits prescribed control signals to the robot arm control unit 70, the paint/cleaning liquid supply control unit 80, the head control unit 90, and the wiping control unit 100 such that the above motors M1 to M6, the paint/cleaning liquid supply unit 40, and the piezoelectric substrate 62 cooperate to execute painting on a painting target object.

The painting system 1 is provided with the image processing device 400. The image processing device 400 includes the image processing unit 410 and a memory 420. The image processing unit 410 is a part that creates image data for each painting path, which is the route along which the painting head 53 executes painting.

The memory 420 is a part that stores the image data for each painting path in correspondence with the painting order.

The image processing device 400 is implemented by a computer, for example, but the computer may be a constituent element of a part of the painting robot 10 or may be provided separately from the painting robot 10. When the image processing device 400 is provided separately from the painting robot 10, data is transmitted and received between the image processing device 400 and the painting robot 10 via wired or wireless communication. Even when the image processing device 400 is provided separately from the painting robot 10, the image processing device may be included in the concept of the painting robot 10, or may not be included in the concept of the painting robot 10.

### (2. Configurations pertaining to the Wiping Mechanism 200 and the Wetting Mechanism 300)

Next, configurations pertaining to the wiping mechanism 200 and the wetting mechanism 300 will be described in order. As described later, the wiping mechanism 200 may have the function of the wetting mechanism, and the wetting mechanism 300 may have the function of the wiping mechanism.

The wiping mechanism 200 is a mechanism for wiping the nozzle forming surface 52 when painting of a vehicle has finished, for example. The wetting mechanism 300 is a mechanism having a function of wetting the nozzles 54 that open to the nozzle forming surface 52.

First, the wiping mechanism 200 according to a first configuration example and a second configuration example will be described. When distinguishing between the wiping mechanisms 200 according to the first configuration and second configuration example, the mechanisms are referred to as the wiping mechanisms 200A and 200B, respectively, but when it is not necessary to distinguish between the mechanisms 200, the mechanisms are simply referred to as the wiping mechanism 200.

### (2-1. First Configuration Example: Wiping Mechanism 200A)

FIG. 5 is a diagram showing the schematic configuration of the wiping mechanism 200A according to the first configuration example. As shown in FIG. 5, the wiping mechanism 200A according to the first configuration example includes a wiping roller 210, a roller moving mechanism 220, and a wiping actuator 230. The wiping mechanism 200A is attached to the painting head unit 50 having the painting head 53.

The wiping roller 210 is a part that wipes the nozzle forming surface 52. The wiping roller 210 has a roller shaft 211, a holding cylinder 212, and an absorbent member 213.

The roller shaft 211 is a shaft-like member, both ends of which are rotatably supported by the roller moving mechanism 220, and is a member that is inserted into a central hole of the holding cylinder 212. The roller shaft 211 is provided so as to cross the nozzle forming surface 52. In the configuration shown in FIG. 5, the roller shaft 211 is provided so as to cross the short-side direction of the nozzle forming surface 52, but the roller shaft 211 may be provided so as to cross the longitudinal direction of the nozzle forming surface 52.

The holding cylinder 212 is a cylindrical member positioned on the outer peripheral side of the roller shaft 211 and is a member that supports the absorbent member 213. The absorbent member 213 is a member that is attached to the outer peripheral side of the holding cylinder 212 and is formed of a member capable of absorbing paint. Thus, examples of materials for the absorbent member 213 include, for example, a sponge-like member, a cloth-like member, and a porous member, for example.

The absorbent member 213 can contain a wetting liquid. In other words, in addition to wiping the nozzle forming surface 52, the absorbent member 213 also has a function of wetting. Therefore, when rolling along the nozzle forming surface 52, the nozzles 54 that open to the nozzle forming surface 52 can be wetted, and drying of paint inside the nozzles 54 can be prevented. As the wetting liquid contained in the absorbent member 213, an organic solvent such as thinner may be used in the case of an oil-based paint, and water may be used in the case of a water-based paint, for example. The cleaning liquid for cleaning the nozzle forming surface 52 and the nozzles 54 may also be the wetting liquid.

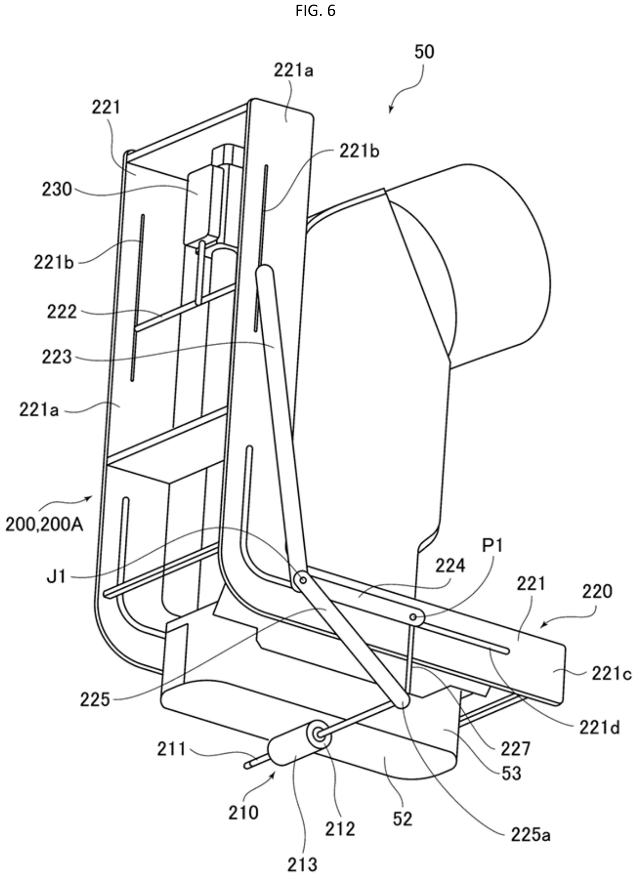

The roller moving mechanism 220 guides movement of the wiping roller 210 along the nozzle forming surface 52. An example of the configuration of such a roller moving mechanism 220 is shown in FIG. 6. In FIG. 5, the roller moving mechanism 220 is shown schematically, and thus, the configuration shown differs from the roller moving mechanism 220 shown in FIG. 6. However, the wiping mechanisms 200, 200A including the roller moving mechanism 220 are not limited to the configurations shown in FIGS. 5 and 6 and may be any configuration.

In the configuration shown in FIG. 6, the roller moving mechanism 220 includes guide plates 221, a first link arm 223, a second link arm 224, and a support arm 225.

The guide plates 221 are disposed at both ends in the width direction of the nozzle forming surface 52. In other words, a pair of the guide plates 221 are provided. In the configuration shown in FIG. 6, the guide plates 221 are provided in a substantially L shape. In the guide plate 221, a drive-side guide groove 221b is provided in a vertical extending part 221a that extends in the vertical direction. Both end sides of a pressing rod 222 are respectively inserted into the pair of drive-side guide grooves 221b, and the pressing rod 222 is also inserted into a hole at one end of the first link arm 223. In other words, the pressing rod 222 and the first link arm 223 are connected.

The first link arm 223 and the second link arm 224 are connected in series via a connecting part J1, and a slide pin P1 that enters a roller guide groove 221d present in a parallel extending part 221c is attached to the other end of the second link arm 224. The one end side of the support arm 225 is also connected to the connecting part J1, and a shaft support part 225a at the other end side of the support arm 225 rotatably supports the roller shaft 211.

A spring member 227 is disposed between the shaft support part 225a of the support arm 225 and the slide pin P1 of the second link arm 224. In the present embodiment, the spring member 227 is a tension spring that imparts a biasing force to bring the absorbent member 213 into contact with the nozzle forming surface 52. The wiping actuator 230 is connected to the pressing rod 222 and provides a driving force to move the pressing rod 222 up and down.

The wiping actuator 230 is a drive source, such as an air cylinder, for example, that slides the pressing rod 222. The wiping actuator 230 may be formed of a motor and a power transmission mechanism such as gears or a cam, for example, instead of an air cylinder.

With this configuration, when the wiping actuator 230 operates, the slide pin P1 slides along the roller guide groove 221d via the pressing rod 222, the first link arm 223, and the second link arm 224. At such time, the support arm 225 is imparted with a biasing force directed toward the second link arm 224 by the spring member 227. Therefore, during the above sliding, the wiping roller 210 supported by the shaft support part 225a is imparted with a biasing force by the spring member 227 to thereby move while rotating along the nozzle forming surface 52 while being pressed against the nozzle forming surface 52. As a result, droplets of paint adhering to the nozzle forming surface 52 can be removed by absorption by the absorbent member 213.

By making the absorbent member 213 contain a wetting liquid, when rolling along the nozzle forming surface 52, the nozzles 54 that open to the nozzle forming surface 52 can be wetted. This can prevent drying of paint inside the nozzles 54.

In the configuration shown in FIG. 5, the wiping mechanism 200A shown moves the wiping roller 210 along the nozzle forming surface 52, but the mechanism for moving the wiping roller 210 along the nozzle forming surface 52 is not limited to the configuration shown in FIG. 5. For example, a configuration may be adopted that uses a motor and a slider-crank mechanism to move the wiping roller 210 along the nozzle forming surface 52.

In the configuration shown in FIG. 6, the parallel extending part 221c is provided longer than the nozzle forming surface 52, and the roller guide groove 221d is also provided longer than the nozzle forming surface 52. Moreover, the roller guide groove 221d is provided in a substantially L shape such that a part along the horizontal direction and a part along the vertical direction are continuous. Therefore, when operating the wiping actuator 230 under control of the wiping control unit 100, the wiping roller 210 can be positioned at a retracted position retracted from the nozzle forming surface 52. Thus, during painting, the wiping roller 210 is prevented from interfering (getting in the way).

For example, a configuration may be adopted in which the wiping roller 210 is moved along the nozzle forming surface 52 using a cam mechanism, a pantograph mechanism, or a ball screw mechanism.

### (2-2. Second Configuration Example: Wiping Mechanism 200B)

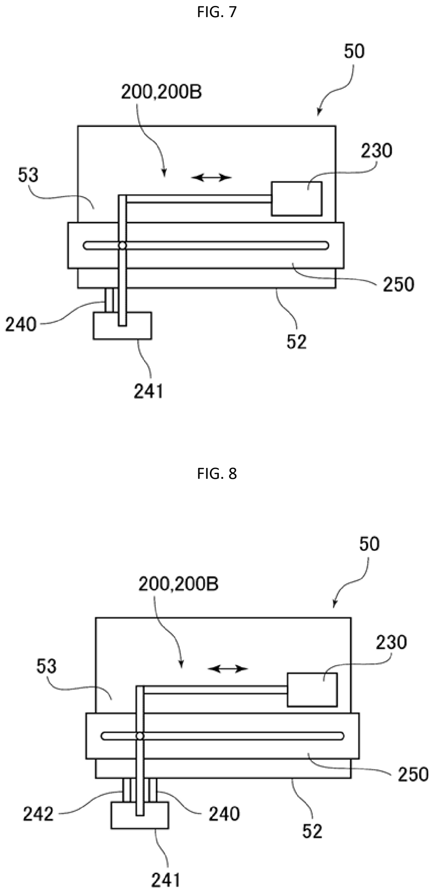

Next, as a second configuration example pertaining to the wiping mechanism 200 and the wetting mechanism 300, the wiping mechanism 200B will be described. FIG. 7 is a diagram showing the schematic configuration of the wiping mechanism 200B according to the second configuration example. As shown in FIG. 7, the wiping mechanism 200B according to the second configuration example includes a wiping wiper 240 instead of the wiping roller 210 provided in the wiping mechanism 200A according to the first configuration example. The wiping wiper 240 is supported by a wiper support member 241.

Examples of the wiping wiper 240 include a paint absorbing member provided in a flat plate shape, such as a sponge-like member, a cloth-like member, or a porous member, for example. Preferably, a configuration that stacks a plurality of the paint absorbing member is adopted in accordance with the thickness of the wiping wiper 240.

When the wiping wiper 240 is formed from a paint absorbing member, the wiping wiper 240 may also have a function of wetting in addition to wiping the nozzle forming surface 52.

The wiping wiper 240 may have a squeegee-like shape, with the material thereof being an elastomer having elasticity, such as rubber or a resin, instead of being a paint-absorbing member such as described above. The material of the wiping wiper 240 may a material not having liquid absorbency. In this case, the wiping wiper 240 can wipe the nozzle forming surface 52, but does not have a function of wetting the nozzle forming surface 52. Therefore, when using a liquid agent for which wetting is not an issue, wiping alone is sufficient without wetting. However, as shown in FIG. 8, for example, a configuration may be adopted in which a wetting member 242 for wetting the nozzle forming surface 52 is disposed on the downstream stride in the movement direction of the wiping wiper 240.

The wiping wiper 240 may be configured to serve both a wiping function and a wetting function.

A wiper moving mechanism 250 that slides the wiping wiper 240 differs from the roller moving mechanism 220 in sliding the wiping wiper 240 without rotating the wiper relative to the nozzle forming surface 52; however, a configuration similar to the roller moving mechanism 220 can be adopted. A wiping actuator that provides a driving force for sliding the wiping wiper 240 can also use the same configuration as the wiping actuator 230. Therefore, a detailed description thereof is omitted.

In this second configuration example, the operation of the wiping actuator 230 slides the wiping wiper 240 via the wiper moving mechanism 250, thereby making it possible to remove droplets of paint adhering to the nozzle forming surface 52 by absorption by the paint absorbing member.

When the wiping wiper 240 is formed of a paint absorbing member, by making the wiping wiper 240 contain a wetting liquid, the nozzles 54 that open to the nozzle forming surface 52 can be wetted when sliding the wiping wiper 240 along the nozzle forming surface 52. This can prevent drying of paint inside the nozzles 54.

### (2-3. Third Configuration Example: Wetting Mechanism 300A)

Next, as a third configuration example pertaining to the wiping mechanism 200 and the wetting mechanism 300, the wetting mechanism 300A will be described. In the following description, when it is not necessary to distinguish between the wetting mechanism 300A according to the third configuration example and a wetting mechanism 300B according to a fourth configuration example described later, the mechanisms are simply referred to as the wetting mechanism 300.

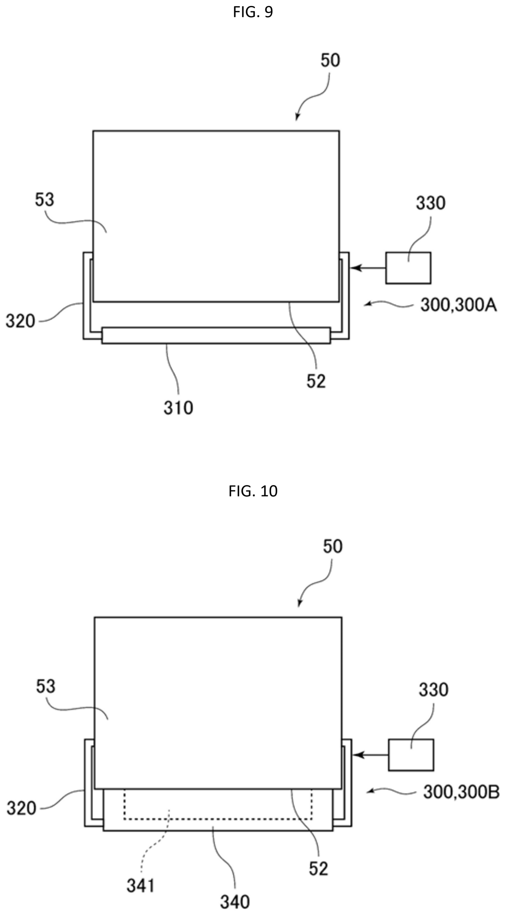

FIG. 9 is a diagram showing the schematic configuration of the wetting mechanism 300A according to the third configuration example. The wetting mechanism 300A is a mechanism mainly having a function of wetting the nozzles 54 that open to the nozzle forming surface 52. The wetting mechanism 300A can also function as a wiping mechanism by sliding after coming into contact with the nozzle forming surface 52, but need not function as a wiping mechanism.

As shown in FIG. 9, the wetting mechanism 300A according to the third configuration example includes a paint receiving part 310 for receiving paint discharged from the nozzles 54. The paint receiving part 310 is, for example, a dish-shaped member, but a configuration may be adopted in which a splashback preventing member is disposed at the bottom of the paint receiving part 310 to soak up discharged paint, absorb discharged paint, and prevent discharged paint from splashing back. Examples of the splashback preventing member include a sponge-like member, a cloth-like member, and a porous member, for example.

The wetting mechanism 300A is provided with a guide mechanism 320 that guides movement of the paint receiving part 310 between a first position for receiving paint and a second position where the paint receiving part 310 is retracted when painting is performed. The wetting mechanism 300A is also provided with an actuator 330 that provides a driving force for the movement described above. The guide mechanism 320 and the actuator 330 are also provided in the wetting mechanism 300B described later. The actuator 330 corresponds to the wiping actuator 230 described above.

When using such a wetting mechanism 300A, paint is discharged from the nozzle 54 when a prescribed discharge timing has arrived. As a result, paint that has increased in viscosity due to drying inside the nozzle 54 is discharged, and a state is achieved in which lower viscosity paint that has not dried remains inside the nozzle 54. Therefore, when painting a vehicle, it is possible to prevent a deterioration in painting quality caused by discharge failure of paint from the nozzles 54.

### (2-4. Fourth Configuration Example: Wetting Mechanism 300B)

Next, as a fourth configuration example pertaining to the wiping mechanism 200 and the wetting mechanism 300, the wetting mechanism 300B will be described. FIG. 10 is a diagram showing the schematic configuration of the wetting mechanism 300B according to the fourth configuration example. As shown in FIG. 10, the wetting mechanism 300B according to the fourth configuration example comprises a cap member 340. The cap member 340 is a member for sealing the nozzle forming surface 52 from the outside by being brought into close contact with the nozzle forming surface 52. Therefore, the cap member 340 is formed of a recessed member made of an elastomer having elasticity such as rubber, for example. The recessed part of the cap member 340 is referred to as a cap recess 341.

A configuration may be adopted in which a suction tube (not shown) that is connected to a suction pump (not shown) is connected to the bottom or side wall of the cap recess 341. In this case, when the suction pump is operated, the inside of the cap recess 341 is vacuum-suctioned via the suction tube, and the nozzle forming surface 52 adheres closely to the cap member 340. Therefore, the space surrounded by the nozzle forming surface 52 and the cap recess 341 can be favourably sealed from the outside.

When using such a wetting mechanism 300B, during non-discharge periods of droplets of paint from the nozzles 54, the cap member 340 is brought into close contact with the nozzle forming surface 52 to seal the nozzle forming surface 52 from the outside. This prevents paint present at the nozzles 54 from drying and increasing the viscosity of the paint. Therefore, when painting a vehicle, it is possible to prevent a deterioration in painting quality caused by discharge failure of paint from the nozzles 54 and paint having increased viscosity.

### (2-5. Fifth Configuration Example: Painting Robot 10A)

Next, a fifth configuration example (painting robot 10) pertaining to the wiping mechanism 200 and the wetting mechanism 300 will be described. When referring to the painting robot 10 according to the fifth configuration example in a manner that distinguishes between the painting robot 10 according to a sixth configuration example described later and the painting robot 10 according to a seventh configuration example described later, the robots are referred to the painting robot 10A, the painting robot 10B, and the painting robot 10C, respectively, and when it is not necessary to distinguish among the painting robots 10 according to these configuration examples, the robots are simply referred to as the painting robot 10.

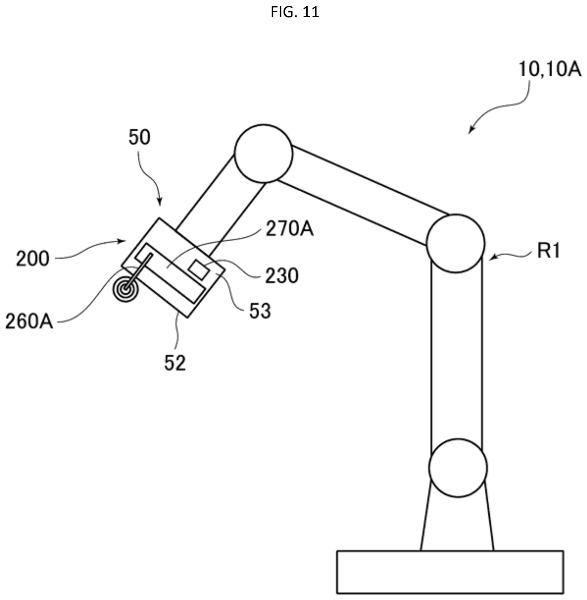

FIG. 11 is a diagram showing the painting robot 10A according to the fifth configuration example, which is equipped with the wiping mechanism 200. In FIG. 11, the painting robot 10A is shown in a mode comprising the wiping mechanism 200, but the painting robot 10A may be configured to include the wetting mechanism 300 instead of the wiping mechanism 200.

In FIG. 11, the wiping mechanism 200 is attached to the painting head unit 50 via a support member 260A. With the support member 260A, even when the robot arm R1 is not operating, the wiping mechanism 200 is enabled to wipe the nozzle forming surface 52 by a moving mechanism 270A such as the roller moving mechanism 220 or the wiper moving mechanism 250, and the wiping actuator 230. The support member 260A may be the guide plate 221 or the like constituting the roller moving mechanism 220 described above, or may be a separate member.

With such a configuration, the overall length of the support member 260A can be made relatively short. Droplets of paint adhering to the nozzle forming surface 52 can be removed by the wiping mechanism 200, and the nozzles 54 opening to the nozzle forming surface 52 can be wetted by the wetting mechanism 300.

### (2-6. Sixth Configuration Example: Painting Robot 10B)

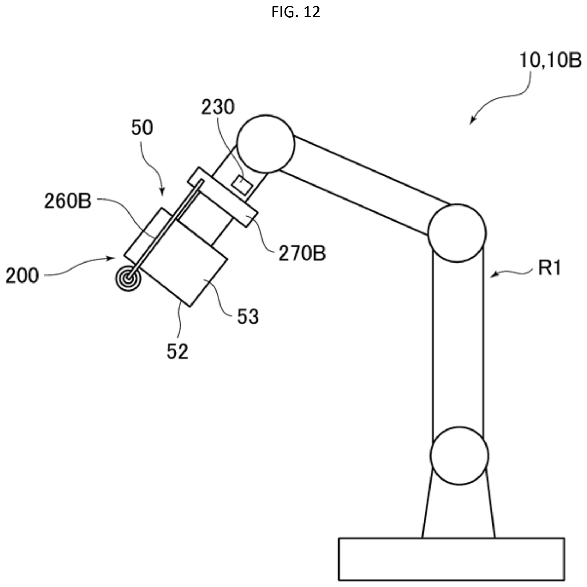

FIG. 12 is a diagram showing the painting robot 10B according to the sixth configuration example, which is equipped with the wiping mechanism 200. In FIG. 12, the painting robot 10B is shown in a mode comprising the wiping mechanism 200, but the painting robot 10B may be configured to include the wetting mechanism 300 instead of the wiping mechanism 200.

In FIG. 12, the wiping mechanism 200 is attached to the robot arm R1 via a support member 260B. With the support member 260B, even when the robot arm R1 is not operating, the wiping mechanism 200 is enabled to wipe the nozzle forming surface 52 by a moving mechanism 270B such as the roller moving mechanism 220 or the wiper moving mechanism 250, and the wiping actuator 230. The support member 260B may be the guide plate 221 or the like constituting the roller moving mechanism 220 described above, or may be a separate member.

With such a configuration, the overall length of the support member 260B becomes longer compared with the support member 260A, but the moment itself when moving the painting head unit 50 can be made small. Droplets of paint adhering to the nozzle forming surface 52 can be removed by the wiping mechanism 200, and the nozzles 54 opening to the nozzle forming surface 52 can be wetted by the wetting mechanism 300.

### (2-7. Seventh Configuration Example: Painting Robot 10C)

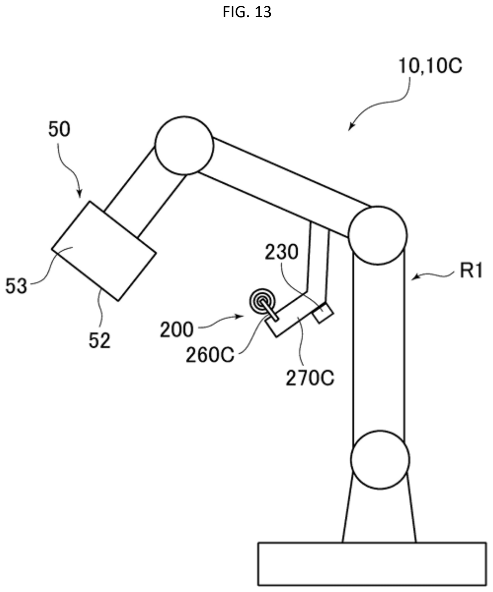

FIG. 13 is a diagram showing the painting robot 10C according to the seventh configuration example, which is equipped with the wiping mechanism 200. In FIG. 13, the painting robot 10C is shown in a mode comprising the wiping mechanism 200, but the painting robot 10C may be configured to include the wetting mechanism 300 instead of the wiping mechanism 200.

In FIG. 13, the wiping mechanism 200 is attached to the robot arm R1 via a support member 260C. However, unlike the support members 260A and 260B described above, the support member 260C does not itself operate to wipe the nozzle forming surface 52 with the wiping mechanism 200.

Therefore, when wiping the nozzle forming surface 52, the robot arm R1 operates such that the nozzle forming surface 52 approaches the wiping mechanism 200. The wiping mechanism 200 supported via the support member 260C is also provided with a moving mechanism 270C such as the roller moving mechanism 220 or the wiper moving mechanism 250, and the wiping actuator 230, and such a moving mechanism 270C and the wiping actuator 230 enable the wiping mechanism 200 to wipe the nozzle forming surface 52. The support member 260C may be the guide plate 221 or the like constituting the roller moving mechanism 220 described above, or may be a separate member.

With such a configuration, the overall length of the support member 260C can be shortened as compared to the support member 260B, and the support member 260C can be made lighter in an amount corresponding to the shortened length. As compared with a case where the wiping mechanism 200 is attached to the painting head unit 50 via the support member 260A, the moment when moving the painting head unit 50 can be made smaller. Droplets of paint adhering to the nozzle forming surface 52 can be removed by the wiping mechanism 200, and the nozzles 54 opening to the nozzle forming surface 52 can be wetted by the wetting mechanism 300.

### (2-8. Eighth Configuration Example: Painting System 1A in which Two Painting Robots 10 are Used to Wipe the Nozzle Forming Surface 52)

Next, an eighth configuration example (painting system 1) pertaining to the wiping mechanism 200 and the wetting mechanism 300 will be described. The painting system 1 is a painting system 1 in which two painting robots 10 are used to wipe the nozzle forming surface 52, but when it is necessary to refer to the painting system 1 in a manner that distinguishes between the painting system according to the eighth configuration example and the painting system 1 according the ninth configuration example described later, the systems are referred to as the painting system 1A and the painting system 1B, respectively, while when it is not necessary to distinguish between the painting robots 10 according to these configuration examples, the systems are simply referred to as the painting system 1.

The painting system 1A according to the eighth configuration example and the painting system 1B according to the ninth configuration example use two painting robots 10, but three or more painting robots 10 may be used.

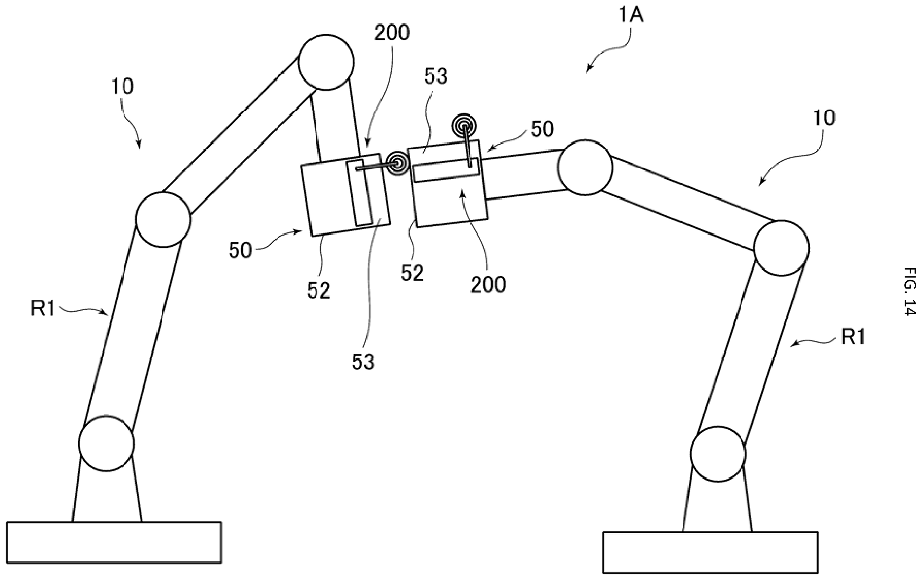

FIG. 14 is a diagram showing the painting system 1A according to the eighth configuration example in which the nozzle forming surface 52 is wiped using two painting robots 10. In the configuration shown in FIG. 14, each painting robot 10 is provided with the wiping mechanism 200. Moreover, the painting robots 10 are respectively installed in a range such that, through cooperation of the two painting robots 10, the nozzle forming surface 52 of one painting robot 10 can be wiped by the wiping mechanism 200 of the other painting robot 10.

In the configuration shown in FIG. 14, the wiping mechanism 200 to each painting head unit 50. However, a configuration may be adopted in which the wiping mechanism 200 is attached to each robot arm R1 instead of to each painting head unit 50.

In such a configuration, when wiping of the nozzle forming surface 52 is instructed in the painting system 1, the robot arm control unit 70 in each painting robot 10 operates the robot arm R1 on the basis of a command from the main control unit 110 so as to position the nozzle forming surface 52 within a wiping range where the nozzle forming surface 52 can be wiped by the wiping mechanism 200 of each painting robot 10.

Then, in one of the painting robots 10, the robot arm control unit 70 operates the robot arm R1 to turn the painting head unit 50 to adjust the orientation such that the nozzle forming surface 52 assumes an orientation that facilitates wiping.

Thereafter, in the other painting robot 10, the wiping control unit 100 operates the wiping mechanism 200 to wipe the nozzle forming surface 52 of the one painting robot 10.

The nozzle forming surface 52 of the other painting robot 10 can be wiped in the same manner as described above. In other words, in the other painting robot 10, the robot arm control unit 70 operates the robot arm R1 to turn the painting head unit 50 to adjust the orientation such that the nozzle forming surface 52 assumes an orientation that facilitates wiping.

Thereafter, in the one painting robot 10, the wiping control unit 100 operates the wiping mechanism 200 to wipe the nozzle forming surface 52 of the other painting robot 10.

With such a configuration, it is possible to adopt a configuration in which wiping of the nozzle forming surface 52 cannot be performed by each painting robot 10 alone, and in such case, it is possible to simplify the configuration in each painting robot 10.

### (2-9. Ninth Configuration Example: Painting System 1B in which Two Painting Robots 10 are Used to Wipe the Nozzle Forming Surface 52)

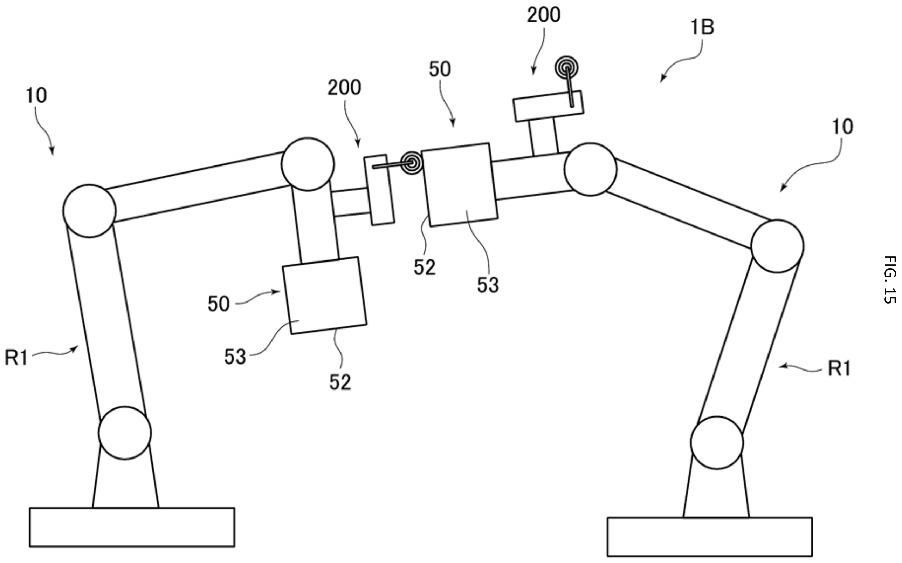

FIG. 15 is a diagram showing the painting system 1B according to the ninth configuration example in which the nozzle forming surface 52 is wiped using two painting robots 10. In the painting system 1B according to the ninth configuration example shown in FIG. 15, unlike the painting system 1A according to the eighth configuration example shown in FIG. 14, the wiping mechanism 200 is not attached to the painting head unit 50. The wiping mechanism 200 is attached to the distal end side of the robot arm R1 as a unit that is separate and independent from the painting head unit 50.

In such a configuration, as in the painting system 1A according to the eighth configuration example, it is possible to wipe the nozzle forming surface 52 of one painting robot 10 and to wipe the nozzle forming surface 52 of the other painting robot 10.

In the painting system 1B according to the ninth configuration example, the wiping mechanism 200 is separate from the painting head unit 50, and thus the existing painting head unit 50 can be used as-is.

### (3. Control for Tilting Painting Head 53)

In the painting robot 10 described above, prior to wiping the nozzle forming surface 52 by the wiping mechanism 200, the robot arm control unit 70 may control the operation of the robot arm R1 on the basis of a command from the main control unit 110 such that the nozzle forming surface 52 is tilted by a prescribed angle relative to the horizontal plane.

When tilting the nozzle forming surface 52, it is preferable for the tilt to be enough for droplets of paint adhered to the nozzle forming surface 52 to flow down. Therefore, the prescribed angle described above does not need to be a very large angle, and for example, the angle can be 15 degrees or less with respect to the horizontal plane.

When tilting in this manner, the robot arm R1 is operated under control of the robot arm control unit 70 prior to the wiping actuator 230 being operated under control of the wiping control unit 100 to wipe the nozzle forming surface 52. As a result, wiping can be performed after the droplets of paint have flowed down along the nozzle forming surface 52 to some extent.

Alternatively, without performing such control to tilt the nozzle forming surface 52, the robot arm control unit 70 may control the operation of the robot arm R1 on the basis of a command from the main control unit 110 such that the nozzle forming surface 52 remains horizontal with respect to the horizontal plane, prior to the wiping mechanism 200 wiping the nozzle forming surface 52. In this case, when the nozzle forming surface 52 is wetted with a wetting liquid by the absorbent member 213 or the wetting mechanism 300, it becomes possible to uniformize the wetting state of each nozzle 54.

### (4. Additional Notes)

The content described in the above embodiment can be understood as follows, for example. In cases where the wetting mechanism 300 has the function of the wiping mechanism 200, it can be understood hereinafter that the wetting mechanism 300 and the constituent components thereof are applied to the wiping mechanism 200.
[1] In other words, a painting robot 10 for performing painting on a painting site of a vehicle, the painting robot comprising: a painting head unit 50 including a painting head 53 having a plurality of nozzles 54 that discharge droplets of paint; a robot arm R1 having the painting head unit 50 fitted on a distal end thereof, the robot arm moving the painting head unit 50 to a desired position; and a wiping mechanism 200 for wiping a nozzle forming surface 52 where the nozzles open, while wetting the nozzle forming surface.

The wiping mechanism 200 includes a wiping roller 210 (wiping member) that slides on the nozzle forming surface 52 while contacting the nozzle forming surface, a guide mechanism (roller moving mechanism 220, wiper moving mechanism 250, moving mechanisms 270A to 270C, etc.) that is attached to the robot arm R1 or the painting head unit 50, and that guides sliding of the wiping member (wiping roller 210, wiping wiper 240, etc.) on the nozzle forming surface 52, and a wiping actuator 230 that imparts a driving force for causing the wiping member (wiping roller 210, wiping wiper 240, etc.) to slide on the nozzle forming surface 52.

With this configuration, when the wiping actuator 230 is driven, the wiping member (wiping roller 210, wiping wiper 240, etc.) slides along the nozzle forming surface 52 via the guide mechanism (roller moving mechanism 220, wiper moving mechanism 250, moving mechanisms 270A to 270C, etc.), thereby wetting and wiping the nozzle forming surface 52. The guide mechanism (roller moving mechanism 220, wiper moving mechanism 250, moving mechanisms 270A to 270C, etc.) is attached to the robot arm R1 or the painting head unit 50, and thus it is not necessary to move the painting head unit 50 outside the painting line when wiping the nozzle forming surface 52. This eliminates the time required for a round trip for movement to outside the painting line, and thus allows for a reduction in the time required for wetting and wiping the nozzle forming surface 52 and enables an improvement in painting productivity.

[2] In the abovementioned embodiment, in addition to the content described in [1] above, it is preferable to comprise a head control unit 90 that controls operation of the painting head 53, and a wiping control unit 100 that controls operation of the wiping actuator 230, wherein when a prescribed wiping timing has arrived and the painting head 53 has stopped discharging under control of the head control unit 90, the wiping control unit 100 operates the wiping actuator 230 to cause the wiping member (wiping roller 210, wiping wiper 240, etc.) to slide on the nozzle forming surface 52 via the guide mechanism (roller moving mechanism 220, wiper moving mechanism 250, moving mechanisms 270A to 270C, etc.).

By controlling the wiping actuator 230 with the wiping control unit 100 when a prescribed wiping timing has arrived, it is possible to wet and wipe the nozzle forming surface 52 at an appropriate timing. This makes it possible to further improve the painting quality of the vehicle.

[3] In the abovementioned embodiment, in addition to the content described in [1] and [2] above or a combination thereof, it is preferable that the painting robot 10 comprise a robot arm control unit 70 that controls operation of the robot arm R1, wherein prior to the operation of the wiping actuator 230 under control of the wiping control unit 100, the robot arm control unit 70 performs control to move the painting head unit 50 by the operation of the robot arm R1 to incline the nozzle forming surface 52.

When the nozzle forming surface 52 is tilted in this manner, wiping can be performed in a state in which the droplets of paint have flowed down along the nozzle forming surface 52 to some extent. Therefore, it is possible to improve the efficiency of wiping the nozzle forming surface 52. The amount of droplets of paint absorbed by the absorbent member 213 can be reduced, and thus the frequency of replacing or cleaning the absorbent member 213 can be reduced.

[4] In the abovementioned embodiment, in addition to the content described in any one of [1] to [3] above or a combination thereof, when wiping by the wiping member (wiping roller 210, wiping wiper 240, etc.) is not performed, the wiping control unit 100 may control the operation of the wiping actuator 230 so as to move the wiping member (wiping roller 210, wiping wiper 240, etc.) to a retracted position that is retracted from the nozzle forming surface 52.

By performing control in this manner, it becomes possible to position the wiping member at a retracted position retracted from the nozzle forming surface 52, and thus it is possible to prevent the wiping member from interfering (getting in the way) during painting.

[5] In the abovementioned embodiment, in addition to the content described in any one of [1] to [4] above or a combination thereof, the wiping mechanism 200 may be attached to the painting head unit 50.

By the wiping mechanism 200 being attached to the painting head unit 50 in this manner, it is possible to perform wetting and wiping of the nozzle forming surface 52 at an appropriate timing with the wiping member (wiping roller 210, wiping wiper 240, etc.) held by the guide mechanism (roller moving mechanism 220, wiper moving mechanism 250, moving mechanisms 270A to 270C, etc.). This makes it possible to further improve the painting quality of the vehicle.

Furthermore, compared to the case where the guide mechanism is attached to the robot arm R1, the total length of the guide mechanism can be shortened, and the weight of the guide mechanism can be reduced accordingly.

[6] In the abovementioned embodiment, in addition to the content described in any one of [1] to [4] above or a combination thereof, the wiping mechanism 200 may be attached to the robot arm R1.

By the wiping mechanism 200 being attached to the robot arm R1 in this manner, it is possible to perform wetting and wiping of the nozzle forming surface 52 at an appropriate timing with the wiping member (wiping roller 210, wiping wiper 240, etc.) of the wiping mechanism 200. This makes it possible to further improve the painting quality of the vehicle.

Compared to the case where the guide mechanism is attached to the painting head unit 50, the total length of the guide mechanism becomes longer, but the moment itself when moving the painting head unit 50 can be reduced, and thus it is possible to improve the motion performance of the painting head unit 50 accordingly.

[7] In the abovementioned embodiment, in addition to the content described in any one of [1] to [6] above or a combination thereof, the wiping mechanism 200A may include a wiping roller 210 provided with an absorbent member 213 that is capable of liquid-absorbing a solvent of the paint on a surface of a holding cylinder 212.

The wiping roller 210 includes the absorbent member 213 in this manner, and thus it is possible to perform wetting and wiping of the nozzle forming surface 52 with the solvent at an appropriate timing by rolling the wiping roller 210 along the nozzle forming surface 52.

[8] In the abovementioned embodiment, in addition to the content described in any one of [1] to [6] above or a combination thereof, the wiping mechanism 200B may include a wiping wiper 240 formed from a liquid-absorbent member that is capable of liquid-absorbing a solvent of the paint together with sliding along the nozzle forming surface 52.

The wiping mechanism 200B includes the wiping wiper 240 in this manner, and thus it is possible to wet and wipe the nozzle forming surface 52 with the solvent by sliding the wiping wiper 240, which is formed from a liquid-absorbent member capable of liquid-absorbing the solvent of the paint, along the nozzle forming surface 52.

[9] In the abovementioned embodiment, in addition to the content described in any one of [1] to [6] above or a combination thereof, the wiping mechanism may be a cap member 340 which shields the nozzle forming surface 52 and in which a cap recess 341 is present between the cap member and the nozzle forming surface 52.

The wiping mechanism is a cap member 340 having cap recess 341 in this manner, and thus it is possible to maintain the wetted state of the nozzle forming surface 52 by sealing the nozzle forming surface 52 with the cap member 340.

[10] In the abovementioned embodiment, in addition to the content described in any one of [1] to [9] above or a combination thereof, a robot arm control unit 70 that controls operation of the robot arm R1 may be provided, wherein one of the painting robots 10 has the wiping mechanism 200, and the robot arm control unit 70 of the other of the painting robots 10 controls the operation of the robot arm R1 while the robot arm control unit 70 of the one of the painting robots 10 controls the operation of the robot arm R1, such that the nozzle forming surface 52 of the other of the painting robots 10 is wiped by the wiping mechanism 200 of the one of the painting robots 10.

By having the nozzle forming surface 52 of the other painting robot 10 wiped by the wiping mechanism 200 of the one painting robot 10 in this manner, it is possible to quickly wet and wipe the nozzle forming surface 52 when the wiping mechanism 200 of the one painting robot 10 is within a prescribed range of the nozzle forming surface 52 of the painting head 53 of the other painting robot 10, for example.

### (5. Variations)

One embodiment of the present invention has been described above, but the present invention can be variously modified in addition to the above embodiment. Variations will be described below.

In the embodiment described above, the painting head 53 adopts an inkjet method that discharges droplets from the nozzles 54 using a piezoelectric substrate 62. However, the painting head is not limited to the inkjet method and may use a dispenser method.

In the first to ninth configuration examples of the above embodiment, the wiping mechanism 200 or the wetting mechanism 300 may move along the longitudinal direction of the nozzle forming surface 52 or may move along the short-side direction of the nozzle forming surface 52. When the wiping mechanism 200 or the wetting mechanism 300 moves along the longitudinal direction of the nozzle forming surface 52, the dimensions of the wiping roller 210 or the wiping wiper 240 can be shortened. When the wiping mechanism 200 or the wetting mechanism 300 moves along the short-side direction of the nozzle forming surface 52, the time required for wiping or wetting can be shortened.

### [Description of Reference Signs]

1, 1A, 1B Painting system, 10, 10A, 10B, 10C Painting robot, 20 Robot body, 21 Base, 22a First rotary shaft, 22b Second rotary shaft, 22c Third rotary shaft, 22d Fourth rotary shaft, 22e Fifth rotary shaft, 22f Sixth rotary shaft, 23 Leg part, 24 First turning arm, 25 Second turning arm, 26 Rotary arm, 27 Wrist part, 40 Cleaning liquid supply unit, 41 Supply path, 42 Return flow path, 45 Switching control valve, 50 Painting head unit, 52 Nozzle forming surface, 53 Painting head, 54 Nozzle, 55 Nozzle row, 55A First nozzle row, 55B Second nozzle row, 62 Piezoelectric substrate, 70 Robot arm control unit, 71 Memory, 80 Cleaning liquid supply control unit, 90 Head control unit, 100 Wiping control unit, 110 Main control unit, 200, 200A, 200B Wiping mechanism, 210 Wiping roller, 211 Roller shaft, 212 Holding cylinder, 213 Absorbent member, 220 Roller moving mechanism, 221 Guide plate, 221a Vertical extending part, 221b Drive-side guide groove, 221c Parallel extending part, 221d Roller guide groove, 222 Pressing rod, 223 First link arm, 224 Second link arm, 225 Support arm, 225a Shaft support part, 227 Spring member, 230 Wiping actuator, 240 Wiping wiper, 241 Wiper support member, 242 Wetting member, 250 Wiper moving mechanism, 260A to 260C Support member, 270A to 270C Moving mechanism, 300, 300A, 300B Wetting mechanism, 310 Paint receiving part, 320 Guide mechanism, 330 Actuator, 340 Cap member, 341 Cap recess, 400 Image processing device, 410 Image processing unit, 420 Memory, J1 Connecting part, M1 to M6 Motor, P1 Slide pin, R1 Robot arm

## Claims

1. A painting robot for performing painting on a painting site of a vehicle, the painting robot comprising:
a painting head unit including a painting head having a plurality of nozzles that discharge droplets of paint;
a robot arm having the painting head unit fitted on a distal end thereof, the robot arm moving the painting head unit to a desired position; and
a wiping mechanism for wiping a nozzle forming surface where the nozzles open, while wetting the nozzle forming surface, wherein
the wiping mechanism includes
a wiping member that slides on the nozzle forming surface while contacting the nozzle forming surface,
a guide mechanism that is attached to the robot arm or the painting head unit, and that guides sliding of the wiping member on the nozzle forming surface, and
a wiping actuator that imparts a driving force for causing the wiping member to slide on the nozzle forming surface.

2. The painting robot according to claim 1, comprising
a head control unit that controls operation of the painting head, and a wiping control unit that controls operation of the wiping actuator, wherein
when a prescribed wiping timing has arrived and the painting head has stopped discharging under control of the head control unit, the wiping control unit operates the wiping actuator to cause the wiping member to slide on the nozzle forming surface via the guide mechanism.

3. The painting robot according to claim 2, comprising
a robot arm control unit that controls operation of the robot arm, wherein
prior to the operation of the wiping actuator under control of the wiping control unit, the robot arm control unit performs control to move the painting head unit by the operation of the robot arm to incline the nozzle forming surface.

4. The painting robot according to claim 2 or 3, wherein
when wiping by the wiping member is not performed,
the wiping control unit controls the operation of the wiping actuator so as to move the wiping member to a retracted position that is retracted from the nozzle forming surface.

5. The painting robot according to any preceding claim, wherein
the wiping mechanism is attached to the painting head unit.

6. The painting robot according to any preceding claim, wherein
the wiping mechanism is attached to the robot arm.

7. The painting robot according to any preceding claim, wherein
the wiping mechanism includes a wiping roller provided with an absorbent member that is capable of liquid-absorbing a solvent of the paint on a surface of a rotatable holding cylinder.

8. The painting robot according to any preceding claim, wherein
the wiping mechanism includes a wiping wiper formed from a liquid-absorbent member that is capable of liquid-absorbing a solvent of the paint by sliding along the nozzle forming surface.

9. The painting robot according to any preceding claim, wherein
the wiping mechanism is a cap member which shields the nozzle forming surface and in which a cap recess is present between the cap member and the nozzle forming surface.

10. A painting system using a pair of painting robots including the painting robot according to any one of claims 1-9, the painting system comprising
a robot arm control unit that controls operation of the robot arm, wherein
one of the painting robots has the wiping mechanism, and
the robot arm control unit of the other of the painting robots controls the operation of the robot arm while the robot arm control unit of the one of the painting robots controls the operation of the robot arm, such that the nozzle forming surface of the other of the painting robots is wiped by the wiping mechanism of the one of the painting robots.
